# EUROPÄISCHE PATENTSCHRIFT

(11) **EP 1 052 514 B1**
(45) Veröffentlichungstag und Bekanntmachung des Hinweises auf die Patenterteilung: **22.09.2004**
(21) Anmeldenummer: 00107744.5
(22) Anmeldetag: 11.04.2000
(51) Int. Cl.: G01P 1/07, G07C 7/00

(54) **Fahrtschreiber mit einem flachen, quaderförmigen Einbaugehäuse und einer quer zur Hochachse des Einbaugehäuses bewegbaren Druckvorrichtung**
Tachograph with housing in form of a flat parallelepiped and printing unit which is movable in a direction perpendicular to the vertical axis
Tachygraphe avec un boîtier parallèlépipédique plat et avec un appareil d'impression mobile dans une direction perpendiculairement à l' axe vertical

(30) Priorität: 23.04.1999 DE 29907171 U
(43) Veröffentlichungstag der Anmeldung: 15.11.2000
(73) Patentinhaber: SIEMENS AKTIENGESELLSCHAFT, 80333 München (DE)
(72) Erfinder: Burkart, Harald, Dipl.-Ing. (FH), 78054 Villingen-Schwenningen (DE)

(56) Entgegenhaltungen:
- EP-A- 0 309 854
- EP-A- 0 791 898
- DE-A- 19 807 217
- DE-U- 29 720 521
- US-A- 2 341 118

## Beschreibung

Die Erfindung betrifft einen Fahrtschreiber mit einem flachen, quaderförmigen Einbaugehäuse und einer quer zur Hochachse des Einbaugehäuses bewegbaren Druckvorrichtung, wobei das Einbaugehäuse aus zwei Gehäusebauteilen, einem Bodenteil und einem Deckelteil, sowie einer Frontwand zusammengefügt ist und die Druckvorrichtung quer zur Hochachse des Einbaugehäuses nicht formatfüllend ausgebildet ist, wobei an einer Seitenwand eine der Druckvorrichtung zugeordnete Führungsschiene befestigt ist und ein Führungsteil vorgesehen ist, an welchem eine zweite Führungsschiene der Druckvorrichtung ausgebildet ist.

Bei einem derartigen Gerätekonzept und dem im Wesentlichen frontwandbündigen Einbau des betreffenden Fahrtschreibers in ein Armaturenbrett besteht das Problem der Zugänglichkeit der Druckvorrichtung, insbesondere bei Verwendung von bandförmigem Druckmaterial hinsichtlich des Einsetzens des Bandwickels in eine entsprechende Aufnahme und des Einfädelns des Bandanfangs zwischen die Transportmittel der Druckvorrichtung. Um diese Zugänglichkeit zu schaffen, ist es erforderlich die Druckvorrichtung als eine dem Fahrtschreiber entnehmbare, beziehungsweise in dem Fahrtschreiber verschiebbar gelagerte Druckerbaugruppe auszubilden. Das heißt, dass in dem Einbaugehäuse des Fahrtschreibers geeignete Führungen vorgesehen werden müssen, wobei wegen der erforderlichen Anzeige- und Betätigungsmittel des Fahrtschreibers, Raumbedarf für Datenkartenführungen und den Datenkarten zugeordnete Transportmittel, einer relativ geringen Bauhöhe des Gerätes und der notwendigen Bauhöhe der Druckvorrichtung nicht die beiden Seitenwände des Einbaugehäuses für das Anbringen von Führungen genutzt werden können, sondern eine der Führungen parallel zu den Seitenwänden in etwa in einem mittleren Bereich des Einbaugehäuses angeordnet werden muss.

Aus dem Deutschen Gebrauchsmuster DE 297 20 521 U1 ist bereits ein Fahrtschreiber der eingangs genannten Art bekannt, dessen Druckvorrichtung jedoch je nach Einbausituation in den Führungsschienen zum Verkanten neigt. Ein der Vorrichtung der eingangs genannten Art ähnlicher Fahrtschreiber ist auch aus der EP 0 791 898 A2 bekannt, der Schubladen zur Aufnahme von Chipkarten, die der Speicherung von Daten dienen aufweist. Auch hier klemmen die Einschübe je nach Einbausituation häufig.

Aufgabe der vorliegenden Neuerung war es daher, eine Gehäusestruktur zu schaffen, welche ohne nennenswerten Aufwand und mit einem geringen zusätzlichen Raumbedarf realisierbar ist und welche eine für das geschilderte Gerätekonzept ausreichende Stabilität bezüglich der Führung der Druckvorrichtung bietet.

Die Lösung der gestellten Aufgabe beschreibt der Anspruch 1. Weitere vorteilhafte Ausgestaltungen der Erfindung gehen aus den Unteransprüchen hervor.

Der Vorteil, den die Erfindung bietet, ist insbesondere darin zu sehen, dass nur ein Bauteil erforderlich ist, welches in geeigneter Weise in dem Deckelteil befestigt ist und an welchem eine Führungsschiene für die Druckvorrichtung ausgebildet ist. Dieses Bauteil stellt durch seine Ausbildung und Befestigung ein Strukturteil dar, welches das Gehäusebauteil, in welchem es angebracht wird, versteift und damit auch für das gesamte Einbaugehäuse eine stabilisierende Funktion ausübt. Mit anderen Worten, die Anwendung des erfindungsgemäßen Strukturteils hat einen Skeletteffekt zur Folge und wirkt sich auf das gesamte Einbaugehäuse versteifend aus, so dass, was aus fertigungstechnischen Gründen und im Hinblick auf den zur Verfügung stehenden Bauraum ohnehin anzustreben ist, für das Einbaugehäuse eine relativ geringe Blechstärke vorgesehen werden kann. Vorteilhaft ist ferner, dass das Strukturteil in einer speziellen Ausbildung auch mit einer formatfüllenden Leiterplatte des Fahrschreibers, und zwar in deren zentralen Bereich verbindbar ist, wenn diese dem betreffenden Gehäuseteil zugeordnet, das heißt zwischen den Seitenwänden befestigt wird. Mit dieser Maßnahme läßt sich eine weitere Versteifung des Fahrtschreibers, insbesondere aber eine Schwingungssicherung der Leiterplatte erzielen.

Als besonderer Vorteil ist außerdem hervorzuheben, daß das Strukturteil gemäß dem nachfolgend beschriebenen Ausführungsbeispiel zusätzlich als Träger für ein dem Fahrtschreiber zugeordnetes Display ausgebildet ist. Zusätzlich läßt sich über das Strukturteil und dessen Verbindung mit dem einen Gehäusebauteil eine Abstützung gegen Durchbiegen beziehungsweise Einwölben des zentralen Bereichs des anderen Gehäusebauteils dadurch erzielen, daß entweder ein an dem Strukturteil in geeigneter Weise angeformter Arm durch die Leiterplatte hindurchgreift oder der Kopf einer beispielsweise der Befestigung der Leiterplatte an dem Strukturteil dienenden Schraube in geeigneter Weise verlängert ausgebildet ist.

Im folgenden sei die Erfindung anhand der beigefügten Zeichnungen näher erläutert. Es zeigen:
- Figur 1: eine vereinfachte perspektivische Darstellung eines Fahrtschreibers der eingangs geschilderten Bauform,
- Figur 2: eine Draufsicht auf das weitgehend freigeschnittene Deckelteil des Fahrtschreibers,
- Figur 3: eine frontseitige Ansicht des Deckelteils mit strichpunktiert angedeuteter Leiterplatte und in Montagelage zugeordnetem Bodenteil,

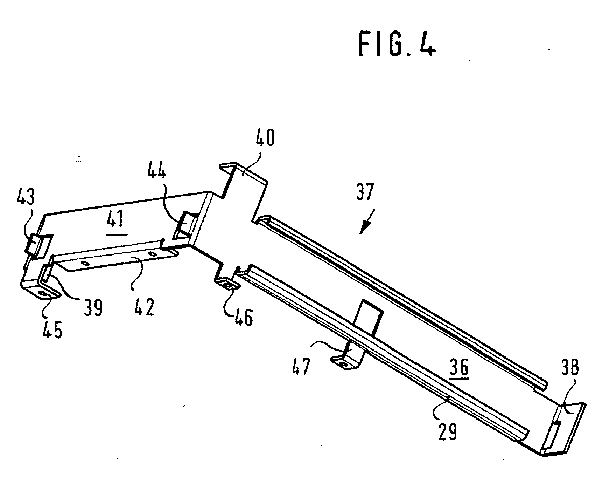

- Figur 4: eine perspektivische Untersicht des Strukturteils.

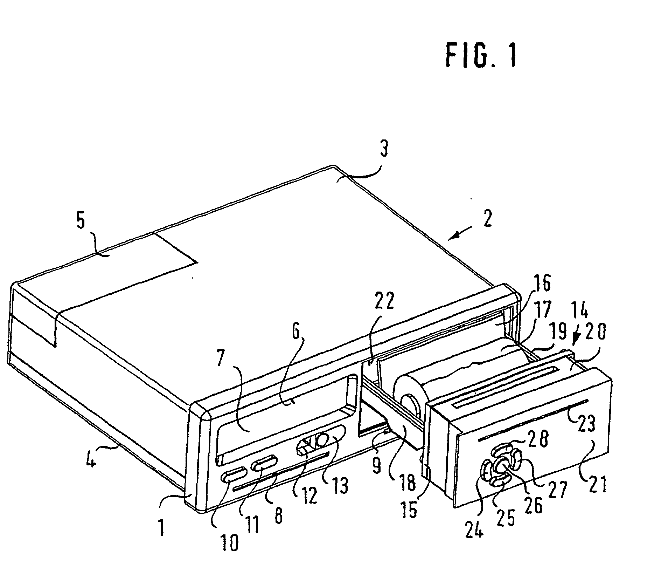

In der vereinfachten Darstellung, Figur 1, ist mit 1 eine vorzugsweise aus Kunststoff hergestellte Frontwand des Einbaugehäuses eines gattungsgemäßen Fahrtschreibers 2 bezeichnet. Ein Deckelteil 3 und ein mit diesem in geeigneter Weise zusammengefügtes Bodenteil 4 sind aus Stahlblech hergestellt und bilden einen weitgehend geschlossenen Einschub des Einbaugehäuses. Mit 5 ist eine einer Steckerkammer des Fahrtschreibers 2 zugeordnete Abdeckung bezeichnet. Wie die Figur 1 ferner zeigt, sind an der Frontwand 1 des Fahrtschreibers 2 ein Fenster 6 für ein Display 7 und schlitzförmige Öffnungen 8 und 9 für das Ein- und Ausgeben von den Fahrern zugeordneten Datenkarten ausgebildet. Außerdem sind in der Frontwand 1 Tasten 10 und 11 gelagert, eine beispielsweise dem Anschluß eines PCs dienende Steckerfassung 12 ausgebildet und eine weitere Kontaktstelle vorgesehen, welche mittels einer mit einer nicht näher bezeichneten Plombe gesicherten Abdeckung 13 verschlossen ist und Diagnose- und Parametrierzwecken dient.

Eine in dem Fahrtschreiber 2 verschiebbar gelagerte Druckvorrichtung 14 wird im wesentlichen gebildet von einem Träger 15, an dem eine Aufnahme 16 für den Bandwickel 17 des verwendeten bandförmigen Druckmaterials und Führungsleisten 18 und 19 angeformt sind. Ferner sind an dem Träger 15 ein Druckwerk 20 zusammen mit einem Frontwandelement 21 angeflanscht, mit welchem eine in der Frontwand 1 vorgesehene Aussparung 22 frontflächenbündig verschlossen ist, wenn die Druckvorrichtung 14 sich in ihrer Funktionsstellung innerhalb des Fahrtschreibers 2 befindet. An dem Frontwandelement 21 sind ein Schlitz 23 für den Durchtritt des Druckmaterials ausgebildet und verschiedene Tasten 24, 25, 26, 27 und 28 des Fahrtschreibers 2 gelagert. Da die Funktionen der Tasten 24, 25, 26, 27 und 28 sowie der Tasten 10 und 11 nicht erfindungswesentlich sind, wird der Einfachheit halber auf eine ins Einzelne gehende Funktionsbeschreibung verzichtet. Andererseits sei jedoch noch erwähnt, daß, um mehr Führungslänge zu erzielen, der Druckvorrichtung eine teleskopische Lagerung zugeordnet werden sollte, das heißt, daß außer den feststehenden Führungsschienen 29 und 30 und den Führungsleisten 18, 19 mitlaufende Zwischenschienen vorgesehen werden sollten.

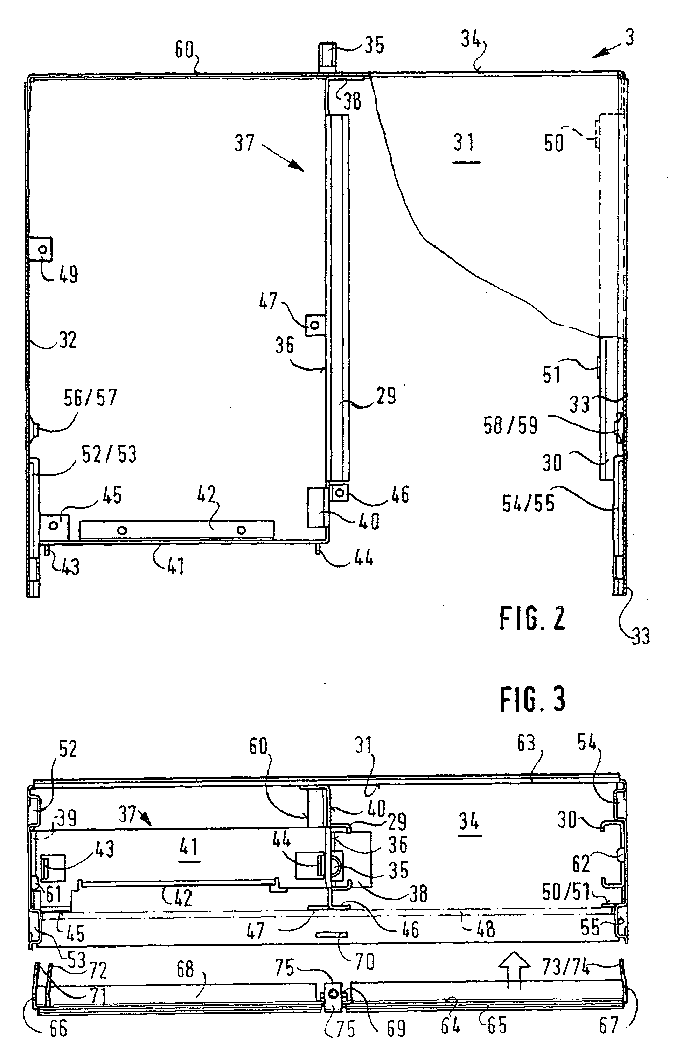

Wie aus den Figuren 2 und 3 ersichtlich ist, weist das Deckelteil 3 in einer gegenüber der vereinfachten Darstellung gemäß Figur 1 konkreten Ausbildung eines Ausführungsbeispiels eine weitgehend weggebrochene Deckelplatte 31, zwei Seitenwände 32 und 33 sowie eine Rückwand 34 auf. Mit 35 ist ein an der Rückwand 34 befestigter Gewindebolzen bezeichnet, welcher im eingebauten Zustand des Fahrtschreibers 2 der Schwingungssicherung dient. Die eine Führungsschiene 30 ist an der Seitenwand 33 befestigt. Die zweite Führungsschiene 29 stellt eine Ausbildung des einen Schenkels 36 eines im wesentlichen L-förmigen Strukturteils 37 dar, welches dem Deckelteil 3 als verbindendes und versteifendes Element zwischen der Seitenwand 32, der Rückwand 34 und der Deckelplatte 31 zugeordnet ist. Dabei dienen an dem Strukturteil 37 angeformte Lappen 38 und 39 der nicht lösbaren Verbindung, vorzugsweise unter Anwendung eines Niet-Verfahrens, mit einerseits der Rückwand 34 andererseits der Seitenwand 32. Mit der Deckelplatte 31 steht das Strukturteil 37 über einen Stützschenkel 40 in Verbindung. An dem anderen Schenkel 41 des Strukturteils 37 ist eine Leiste 42 ausgebildet, welche der Befestigung des Displays 7 mittels Schraubverbindungen dient. An dem Schenkel 41 ausgeformte Zungen 43 und 44 sind dem Display 7 als Abstandshalter zugeordnet. An dem Strukturteil 37 sind außerdem mit 45, 46 und 47 bezeichnete, für Schraubverbindungen vorbereitete Stützen ausgebildet. Diese dienen dem Abstützen und Befestigen einer im wesentlichen dem Format der Deckelplatte 31 entsprechenden Leiterplatte 48. Außerdem sind an den Seitenwänden 32 und 33 herausgebogene Auflagen 49, 50 und 51 für Befestigung der Leiterplatte 48 vorgesehen.

Der Vollständigkeit halber sei noch erwähnt, daß in den Seitenwänden 32, 33 Senkungen 52/53 und 54/55 sowie Einzüge 56/57 und 58/59 für die Anordnung und Befestigung von paarweise ausgebildeten, federnden Krallen vorgesehen sind, die der Befestigung des Fahrtschreibers 2 in einem Armaturenbrett dienen. 60 stellt einen den Zugang zur Steckerkammer des Fahrtschreibers 2 ermöglichenden Freischnitt in der Rückwand 34, der Seitenwand 32 und dem Deckelteil 31 dar. Mit 61 und 62 sind in den Seitenwänden 32, 33 ausgeformte Rastzapfen bezeichnet, die der Befestigung der Frontwand 1 dienen. Eine stirnseitige Abkröpfung 63 der Deckelplatte 31 ist für eine zusätzliche Versteifung des Deckelteils 3 vorgesehen.

Das in Figur 3 in einer Montageposition dem Deckelteil 3 zugeordnet dargestellte Bodenteil 4 besteht im wesentlichen aus einer Bodenplatte 64, die stirnseitig ebenfalls durch eine Abkröpfung 65 versteift ist sowie seitlich und rückseitig angeformten randlichen Leisten 66, 67 und 68. Mit 69 ist eine an der Leiste 68 ausgebildete Zunge bezeichnet, die beim Zusammenfügen von Deckelteil 3 und Bodenteil 4 mit einem in der Rückwand 34 des Deckelteils 3 vorgesehenen Schlitz 70 in Eingriff geht. Am Bodenteil 4 ausgebildete Riegel 71 und 72 sowie 73/74 sind für das Befestigen des Bodenteils 4 an dem Deckelteil 3 vorgesehen indem sie mit den Auflagen 49, 50 und 51 des Deckelteils 3 und der Stütze 45 des Strukturteils 37 zusammenwirken. Dabei ist für die Montage des Bodenteils 4 eine bajonettartige Montagebewegung erforderlich. Im übrigen ermöglicht die Konstruktion des Einbaugehäuses eine Montage des Bodenteils 4 nachdem der ansonsten fertig montierte Fahrtschreiber 2 funktionsgeprüft ist. Mittels eines an dem Bodenteil 4 angeformten Schenkels 75 läßt sich das Bodenteil 4 mit der Frontwand 1 verschrauben und eine Plombierung des Bodenteils realisieren.

## Patentansprüche

1. Fahrtschreiber mit einem flachen, quaderförmigen Einbaugehäuse und einer quer zur Hochachse des Einbaugehäuses bewegbaren Druckvorrichtung (14), wobei das Einbaugehäuse aus zwei Gehäusebauteilen, einem Bodenteil (4) und einem Deckelteil (3), sowie einer Frontwand zusammengefügt ist und die Druckvorrichtung (14) quer zur Hochachse des Einbaugehäuses nicht formatfüllend ausgebildet ist, wobei an einer ersten Seitenwand (33) eine der Druckvorrichtung (14) zugeordnete Führungsschiene (30) befestigt ist, und ein Strukturteil (37) vorgesehen ist, an welchem eine zweite Führungsschiene (29) der Druckvorrichtung (14) ausgebildet ist,
**dadurch gekennzeichnet,**
- **dass** das Deckelteil (3) wenigstens aus einer Deckelplatte (31) und zwei parallelen Seitenwänden (32, 33) gebildet ist,
- **dass** das Strukturteil (37) in dem Deckelteil (3) befestigbar ausgebildet ist,
- **dass** das Strukturteil (37) sowohl mit der zweiten Seitenwand (32), einer Rückwand (34) und der Deckelplatte (31) des Deckelteils (3) verbunden ist als auch dem Befestigen einer die elektronischen Funktionselemente des Fahrtschreibers (2) tragenden, dem Deckelteil (3) zugeordneten Leiterplatte (48) dient.

2. Fahrtschreiber nach Anspruch 1, **dadurch gekennzeichnet, dass** das Deckelteil (3) aus einer Deckelplatte (31), zwei parallelen Seitenwänden (32, 33) und einer Rückwand (34) gebildet ist.

3. Fahrtschreiber nach Anspruch 1, **dadurch gekennzeichnet, dass** das Strukturteil (37) im Wesentlichen L-förmig geformt ist, wobei der eine Schenkel (36) als Führungsschiene (29) und der andere Schenkel (41) als Träger für ein in dem Fahrtschreiber (2) vorgesehenes Display (7) ausgebildet ist.

4. Fahrtschreiber nach Anspruch 1, **dadurch gekennzeichnet, dass** das Strukturteil (37) unlösbar mit dem Deckelteil (3) verbunden ist.

5. Fahrtschreiber nach Anspruch 1, **dadurch gekennzeichnet, dass** das Strukturteil (37) derart ausgebildet und in dem Deckelteil (3) befestigt ist, dass es dem Bodenteil (4) als Stützelement dient.

## Claims

1. Tachograph having a flat, parallelepiped-shaped installation housing and a printing device (14), which can be moved transversely with respect to the vertical axis of the installation housing, the installation housing being assembled from two housing parts, a bottom part (4) and a cover part (3), and a front panel, and the printing device (14) being embodied transversely with respect to the vertical axis of the installation housing in a way which does not fill a format, a guide rail (30) which is assigned to the printing device (14) being attached to a first side wall (33), and a structural part (37) being provided on which a second guide rail (29) of the printing device (14) is constructed, **characterized**
- **in that** the cover part (3) is formed at least from a cover plate (31) and two parallel side walls (32, 33),
- **in that** the structural part (37) is designed so as to be capable of being attached in the cover part (3),
- **in that** the structural part (37) is both connected to the second side wall (32), a rear wall (34) and the cover plate (31) of the cover part (3) and is also used for attaching a printed circuit board (48) which is fitted with the electronic functional elements of the tachograph (2) and is assigned to the cover part (3).

2. Tachograph according to Claim 1, **characterized in that** the cover part (3) is formed from a cover plate (31), two parallel side walls (32, 33) and a rear wall (34).

3. Tachograph according to Claim 1, **characterized in that** the structural part (37) is essentially L shaped, one limb (36) being embodied as a guide rail (29), and the other limb (41) being embodied as a carrier for a display (7) which is provided in the tachograph (2).

4. Tachograph according to Claim 1, **characterized in that** the structural part (37) is nondetachably connected to the cover part (3).

5. Tachograph according to Claim 1, **characterized in that** the structural part (37) is embodied and attached in the cover part (3) in such a way that it serves as a supporting element for the bottom part (4).

## Revendications

1. Tachygraphe avec un boîtier encastré parallélépipédique plat et avec un appareil d'impression (14) mobile dans une direction perpendiculairement à l'axe vertical du boîtier encastré, le boîtier encastré étant assemblé à partir de deux composants de boîtier, une pièce de fond (4) et une pièce de couvercle (3), ainsi qu'à partir d'une paroi frontale et l'appareil d'impression (14) étant formé perpendiculairement à l'axe vertical du boîtier encastré en ne remplissant pas le format, un rail de guidage (30) attribué à l'appareil d'impression (14) étant fixé sur une première paroi latérale (33), et une pièce de structure (37) étant prévue, sur laquelle est formé un deuxième rail de guidage (29) de l'appareil d'impression (14),
**caractérisé en ce que**
- la pièce de couvercle (3) est formée au moins d'une plaque de couvercle (31) et de deux parois latérales parallèles (32, 33),
- la pièce de structure (37) est exécutée de manière à pouvoir être fixée dans la pièce de couvercle (3),
- la pièce de structure (37) est aussi bien raccordée à la deuxième paroi latérale (32), à une paroi arrière (34) et à la plaque de couvercle (31) de la p ièce de couvercle (3) qu'elle sert également à fixer u ne plaquette à circuit imprimé (48) portant les éléments de fonction électroniques du tachygraphe ( 2), attribuée à la p ièce de couvercle (3).

2. Tachygraphe selon la revendication 1, **caractérisé en ce que** la pièce de couvercle (3) est formée par une plaque de couvercle (31), par deux parois latérales parallèles (32, 33) et par une paroi arrière (34).

3. Tachygraphe selon la revendication 1, **caractérisé en ce que** la pièce de structure (37) est essentiellement formée en L, l'un des côtés (36) étant exécuté comme rail de guidage (29) et l'autre côté (41) comme support pour un écran (7) prévu dans le tachygraphe (2).

4. Tachygraphe selon la revendication 1, **caractérisé en ce que** la pièce de structure (37) est raccordée à la pièce de couvercle (3) de manière inamovible.

5. Tachygraphe selon la revendication 1, **caractérisé en ce que** la pièce de structure (37) est exécutée et fixée dans la pièce de couvercle (3) de telle sorte qu'elle sert d'élément d'appui à la pièce de fond (4).
